# EUROPEAN PATENT SPECIFICATION

(11) **EP 4 160 514 B1**
(45) Date of publication and mention of the grant of the patent: **26.08.2026**
(21) Application number: 21814260.2
(22) Date of filing: 25.02.2021
(51) Int. Cl.: G06Q 10/04, G06Q 10/0631, G06Q 10/0637, G06Q 30/0201, G06Q 50/06, H02J 3/00, H02J 3/008

(54) **POWER GENERATION PLANNING DEVICE AND POWER GENERATION PLANNING METHOD**
STROMERZEUGUNGSPLANUNGSVORRICHTUNG UND STROMERZEUGUNGSPLANUNGSVERFAHREN
DISPOSITIF DE PLANIFICATION DE PRODUCTION D'ÉNERGIE ET PROCÉDÉ DE PLANIFICATION DE PRODUCTION D'ÉNERGIE

(30) Priority: 28.05.2020 JP 2020093125
(43) Date of publication of application: 05.04.2023
(73) Proprietor: Hitachi, Ltd., Tokyo 100-8280 (JP)
(72) Inventor: KINOSHITA, Yoshihito, Tokyo 100-8280 (JP); WATANABE, Masahiro, Tokyo 100-8280 (JP)
(74) Representative: Mewburn Ellis LLP
(86) International application number: PCT/JP2021/007100
(87) International publication number: WO 2021/240924

(56) References cited:
- JP-A- 2004 088 840
- JP-A- 2010 092 310
- JP-A- 2017 187 932
- US-A1- 2004 181 491
- US-A1- 2005 015 283
- US-A1- 2017 293 975

## Description

### Technical Field

The present invention relates to a power generation planning apparatus and a power generation planning method that are used when a power supplier such as a company having a plurality of power generation facilities or a power intermediary creates a power generation plan and a fuel operation plan.

### Background Art

A conventional power generation planning apparatus determines an operation and stop state and output of the power generator according to a power demand by satisfying operational constraints of each power generator and a power system based on a demand forecast value at each time of a planning period.

As such a power generation planning method for a power generator, a method in Non-Patent Literature 1 is known. In Non-Patent Literature 1, a power generation plan is constructed such that a total power generation cost is minimized while satisfying operational constraints of each power generator and the power system. The operational constrains include a demand and supply balance in which a demand and a supply of power matches each other, a minimum-up time or a minimum-down time in which an activated or stopped power generator maintains such a state for a certain period of time, and a fuel consumption amount of consumption of a specified range amount of fuel in a specific period.

Meanwhile, in recent years, renewable energy such as photovoltaic generations whose output depends on weather is connected to a power system on a large scale. As power output of the photovoltaic generations increases, an opportunity for power generation by a thermal power generator decreases, and there may be excess fuel in the thermal power generator.

Although a fuel operation plan for procuring the fuel required for the power generation is created after creating the power generation plan, economic fuel consumption is required by a plan considering both power generation and fuel operation at the same time in order to prevent generation of excess fuel. As this integrated fuel and power generation plan, a method in PTL 1 is known. In PTL 1, to integrate the fuel operation plan and the power generation plan, calculation to create each plan is iteratively and mutually executed based on results of both plan. Here, the fuel operation plan considers a remaining amount of fuel tank and a fuel trading amount in a fuel market, and the power generation plan considers a power trading amount in a power market and a fuel consumption for power generation. Accordingly, the fuel operation plan and the power generation plan improve economic efficiency in consideration of a mutual interaction therebetween.

PTL 2 discloses an energy demand-supply plan formulation apparatus, the apparatus including: a data coordination unit for calculating first coordination data including an electric power-generation unit-price and specific heat consumption from the electric power generation plan, for calculating second coordination data from the steam demand-supply plan, and for calculating third coordination data including an electric power generation fuel-consumption plan from the transaction plan and the electric power generation plan; a steam demand-supply planning unit for formulating a steam demand-supply plan by taking in first coordination data calculated by the data coordination unit; an electric power demand-supply planning unit for formulating a transaction plan in the electric power transaction market and an electric power generation plan therein by taking in second coordination data calculated by the data coordination unit; and a fuel demand-supply planning unit for formulating a fuel demand-supply plan by taking in third coordination data calculated by the data coordination unit.

PTL 3 discloses a method, equipment and a program that present uncertain factors such as the demand variation of electric power, electric power unit price and fuel unit price in stochastic models, provide the analytical means of the correlation between return and risk by which the results can be quantitatively given, have GUI means to do trial and error evaluation of the combinations of various conditions regarding to the interrupt operation plan and electric power trade contract plan and have an amendment means by which the amendment of plans is cooperated with the analytical means of the correlation between return and the risk has been proposed. The system enables comprehension of the correlation between returns and risk that the present operating schedule involves.

PTL 4 discloses an electric-power-generating-facility operation management support system that includes a condition-input unit inputting costs of electric power generation in electric power generating facilities, probability distribution of predicted values of the demand for electric power, and probability distribution of predicted values of the transaction price of power on the market. An optimal-operational-condition calculating unit calculates the performance of power generation of the power generating facilities based upon the costs of power generation, the probability distribution of predicted values of the demand for power and the probability distribution of predicted values of the transaction price of power on the market, input from the condition-input unit so as to obtain the optimal operational conditions which exhibit the maximum performance of power generation A risk estimating unit calculates and estimates a risk value of damage of the optimal operation under the optimal operational conditions. A calculation-result display unit displays the optimal operational conditions and the risk-estimation results.

### Citation List

### Patent Literature

PTL 1: Japanese Patent No. 6513039
PTL 2: US 2017/293975 A1
PTL 3: US 2004/181491 A1
PTL 3: US 2005/015283 A1

### Non-Patent Literature

Non-patent Literature 1: Toshiyuki Sawa, Yasuo Sato, Mitsuo Tsurugai, Tsukasa Oonishi, "Daily Integrated Generation Scheduling for Thermal, Pumped-Storage Hydro and Cascaded Hydro Units and Purchasing Power Considering Network Constraints", IEEJ Trans. PE, Vol.128, No.10 (2008)

### Summary of Invention

### Technical Problem

As an element of the fuel operation, it is possible to change a destination of a fuel ship to a different fuel tank or to sell fuel loaded on a fuel ship to another consumer and supply the fuel to a fuel tank of another consumer. By considering these, there is a possibility that economic efficiency can be further improved and excess or shortage of fuel can be reduced, which is not considered in PTL 1.

In the fuel operation, it is necessary to trade a delivery amount of fuel that will be delivered in several months in a fuel market, and to determine in advance a supply date or a supply amount of the fuel that will be supplied in several months or more in a fuel contract as well. Since it is necessary to procure the fuel required on a future day several months before, a power generation plan is created based on an assumed forecast result of a power demand several months later, and the required fuel is calculated based on power output of power generators. Accuracy of demand forecast after several months is low, and thus excess or shortage may occur in the fuel required several months later in PTL 1. Economic efficiency may be significantly impaired due to fuel adjustment caused by excess or shortage of the fuel or a violation of a fuel contract.

Accordingly, the invention provides a power generation planning apparatus and a power generation planning method, which prevent excess or shortage of required fuel and improve economic efficiency by considering an excess or shortage amount of required fuel caused by an error in forecast such as demand forecast, output of a thermal power generator of a thermal power generation plan, fuel trading in a fuel market, and a change in destination of a fuel ship.

### Solution to Problem

As described above, the invention provides a "power generation planning apparatus as set forth in claim 1.

The invention provides "a power generation planning method as set forth in claim 8.

### Advantageous Effects of Invention

According to the invention, it is possible to provide a power generation planning apparatus in which excess or shortage of required fuel is prevented and economic efficiency is improved by considering a variation in fuel consumption amount caused by an error in forecast such as demand forecast, output of a power generator of a power generation plan, fuel trading in a fuel market, and adjustment of a destination of a fuel ship. Problems, configurations, and effects other than those described above will be clarified based on descriptions of embodiments as follows.

### Brief Description of Drawings

[FIG. 1] FIG. 1 is a diagram showing a software configuration example of a power generation planning apparatus according to a first embodiment of the invention.
[FIG. 2] FIG. 2 is a diagram showing a hardware configuration example of the power generation planning apparatus according to the first embodiment of the invention used via a communication network.
[FIG. 3] FIG. 3 is a flowchart showing entire processing of a power generation planning apparatus.
[FIG. 4] FIG. 4 is a network diagram connecting a port having a fuel tank at which a ship can move at such a time and a supply location by an arrow.
[FIG. 5] FIG. 5 is a network diagram including a case in which a part of fuel is purchased.
[FIG. 6] FIG. 6 is a diagram showing an example of a trend of the fuel tank based on a result of processing step S3.
[FIG. 7] FIG. 7 is a diagram showing an example of characteristics according to a trading amount and a market price in a power market.
[FIG. 8] FIG. 8 is a diagram showing a software configuration example of a power generation planning apparatus according to a second embodiment of the invention.
[FIG. 9] FIG. 9 is a flowchart showing entire processing of the power generation planning apparatus according to the second embodiment.
[FIG. 10] FIG. 10 is a diagram showing a method for creating combined long-term demand cases.
[FIG. 11] FIG. 11 is a diagram showing a comparative example of a result according to a ratio in which combined demand variation cases are considered.

### Description of Embodiments

Hereinafter, preferred embodiments suitable for carrying out the invention will be described. It should be noted that the following are merely embodiments, and the invention itself is not intended to be limited to the following specific contents.

### [First Embodiment]

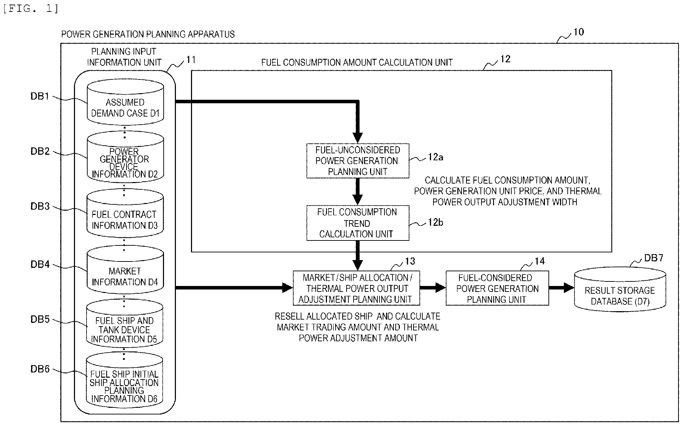

A first embodiment of the invention will be described below with reference to FIGS. 1 to 7.

FIG. 1 is a diagram showing a software configuration example of a power generation planning apparatus according to the first embodiment of the invention, and is a diagram representing functions in which main processing functions are executed by a calculation unit of a computer device when the power generation planning apparatus is implemented using the computer device, together with various databases holding various types of data.

In the case in FIG. 1, a power generation planning apparatus 10 includes, as the main processing functions, a planning input information unit 11, a fuel consumption amount calculation unit 12, a market/ship allocation/thermal power output adjustment planning unit 13, a fuel-considered power generation planning unit 14, and a result storage database DB7. The fuel consumption amount calculation unit 12 includes a fuel-unconsidered power generation planning unit 12a and a fuel consumption trend calculation unit 12b.

Databases DB of the planning input information unit 11 include, in addition to the result storage database DB7, an assumed demand database DB1 that stores an assumed demand D1 corresponding to a required power generation amount, a power generator device information database DB2 that stores power generator device information D2 such as a device constant indicating characteristics of each power generator, a fuel contract information database DB3 that stores fuel contract information D3 such as a contract related to fuel between a power generation company and another consumer, a market information database DB4 that stores market information D4 related to a power market or a fuel market such as a market price, a fuel ship and tank device information database DB5 that stores fuel ship and tank device information D5 such as specifications and a current state of a fuel ship and a fuel tank owned by a power generation company and a fuel supplier, and a fuel ship initial ship allocation planning information database DB6 that stores fuel ship initial ship allocation planning information D6 required for a fuel operation plan and a power generation plan.

The following processing is performed using various types of information that are stored in the planning input information unit 11. First, the fuel-unconsidered power generation planning unit 12a of the fuel consumption amount calculation unit 12 refers to the assumed demand D1 of the assumed demand database DB1 and the power generator device information D2 of the power generator device information database DB2, constructs an operation of the power generator capable of generating power for the assumed demand in the future, and calculates operation and stop of the power generator and output of the power generator. However, here, a combination of power generators activated only from an aspect of the power generation device operation is determined by only identifying usable power generators and operation thereof without considering the fuel in this case. In addition, it is assumed that a forecast period of the assumed demand in this case is set in advance, but in general, it is preferable to predict several months.

Next, the fuel consumption trend calculation unit 12b refers to the fuel contract information database DB3 to obtain the fuel contract information, and calculates a trend of a fuel consumption amount that is consumed by power generation and necessary for attaining the forecasted output of the power generator. The fuel consumption amount is calculated by the fuel-unconsidered power generation planning unit 12a.

The market/ship allocation/thermal power output adjustment planning unit 13 refers to the market information database DB4 to obtain the market information D4 (a power trading amount in the power market and a fuel trading amount in the fuel market), refers to the fuel ship and tank device information database DB5 to obtain the tank information D5, obtains the fuel ship initial ship allocation plan from the fuel ship initial ship allocation planning information database DB6, considers the trend of the fuel consumption amount to consume fuel for a total target fuel consumption amount, and adjusts the trend of the fuel consumption amount by adjusting or changing the power trading amount in the power market, the fuel trading amount in the fuel market, and a route such as a destination of the fuel ship such that economic efficiency can be improved with a remaining amount in the fuel tank within a maximum or minimum capacity.

Finally, the fuel-considered power generation planning unit 14 corrects the fuel consumption amount in the corresponding period calculated by the fuel-unconsidered power generation planning unit 12a based on the power trading amount in the power market from the market/ship allocation/thermal power output adjustment planning unit 13, considers the fuel consumption amount and constructs the power generation plan to satisfy the total consumption amount in the specific period, stores the result calculated by each unit in the result storage database DB7 as result information D7, and displays the result on a monitor screen.

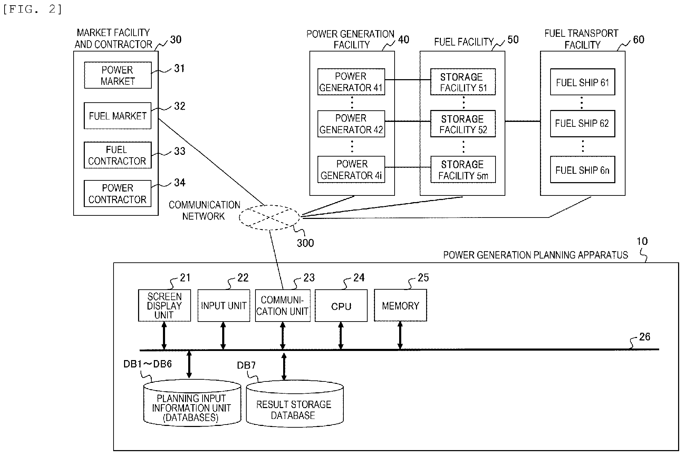

FIG. 2 is a diagram showing a hardware configuration example of the power generation planning apparatus according to the first embodiment of the invention used via a communication network. The power generation planning apparatus 10 is connected to a power generation facility 40, a fuel facility 50, a fuel transport facility 60, and a market facility and contractor 30 via a communication network 300.

Among these facilities, the power generation facility 40 includes power generators 4 (41, 42, ..., 4i) such as a thermal power generator, the fuel facility 50 includes storage facilities 5 (51, 52, ..., 5m) that store and supply fuel of each power generator like a fuel tank, the fuel transport facility 60 includes fuel ships 6 (61, 62, ..., 6n) that transport fuel from a fuel supply location to each fuel facility 50, and the market facility and contractor 30 indicates a power market 31, a fuel market 32, and a fuel contractor 33 and a power contractor 34 as relative contractors.

The power generation planning apparatus 10 according to the invention constructs a power generation plan based on information held by these facilities, markets, and contractors. Specifically, information held by the power generation facility 40, the fuel facility 50, the fuel transport facility 60, and the market facility and contractor 30 is obtained via the communication network 300 and a communication unit 23 in the power generation planning apparatus 10, and is stored in databases (DB1 to DB6) in the planning input information unit 11.

The power generation planning apparatus 10 stores the result calculated in the power generation planning apparatus 10 in the result storage database DB7, extracts result data from the result storage database DB7 as appropriate and necessary, and transmits the result to the power generation facility 40, the fuel facility 50, the fuel transport facility 60, and the market facility and contractor 30 via the communication unit 23 and the communication network 300. When other input information required for the power generation planning apparatus 10 is present, the communication unit 23 communicates with another system to acquire the input information.

The power generation planning apparatus 10 is implemented by a computer system, and a screen display unit 21 such as a display device, an input unit 22 such as a keyboard or a mouse, the communication unit 23, a CPU 24, a memory 25, and various databases DB are connected to a bus line 26.

Among these devices and units, the screen display unit 21 may be implemented using, for example, a printer device or an audio output device instead of the display device or together with the display device. The input unit 22 can include, for example, at least one of a pointing device such as a keyboard switch or a mouse, a touch panel, and an audio instruction device. The communication unit 23 includes a circuit and a communication protocol for connecting to the communication network 300. The CPU 24 executes a calculation program to instruct image data to be displayed, search data in various databases, and the like. The CPU 24 may be implemented as one or a plurality of semiconductor chips, or may be implemented as a computer device such as a calculation server. The memory 25 is implemented as, for example, a random access memory (RAM), stores a computer program, and stores calculation result data, image data, and the like that are necessary for each piece of processing. The data stored in the memory 25 is sent to and displayed on the screen display unit 21.

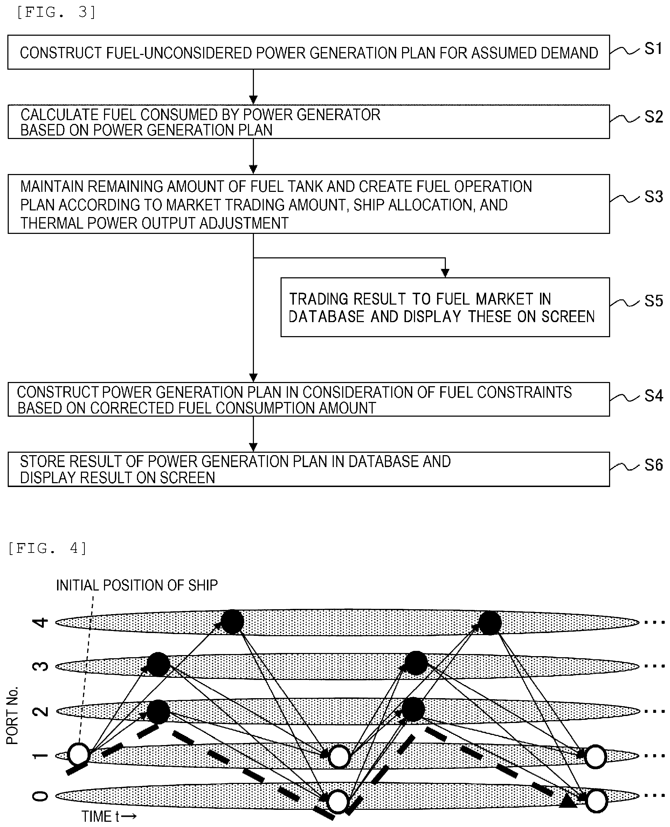

FIG. 3 is a flowchart showing entire processing of the power generation planning apparatus 10. In a first processing step S1 in FIG. 3, information necessary for construction of the power generation plan, such as the assumed demand D1 and the power generator device information D2, is extracted from the planning input information unit 11, and the power generation plan is constructed by the fuel-unconsidered power generation planning unit 12a without considering operational constraints (such as a fuel consumption constraint) that require a total fuel consumption amount in a specific period to be within a specified range. The construction of the power generation plan can be constructed using the method described in Non-Patent Literature 1.

In processing step S2, the fuel consumption trend calculation unit 12b calculates the trend of the fuel consumed by the power generator based on results of operation and stop and output of the power generator in the power generation plan. Here, the fuel consumption is calculated by referring to the power generator device information database DB2 according to characteristics related to the fuel consumption corresponding to output that is one of characteristics of the power generator.

In processing step S3, the market/ship allocation/thermal power output adjustment planning unit 13 considers the trend of the fuel consumed by the power generator, and constructs the fuel operation plan under constraints that the fuel consumption is equal to or greater than the total target fuel consumption amount, which is the consumption of the purchased fuel from the fuel supplier, and that the remaining amount of the fuel tank is within the maximum or minimum capacity.

In order to satisfy the constraints and improve the economic efficiency, the power trading amount in the power market, the fuel trading amount in the fuel market, and the route such as the destination of the fuel ship are adjusted or changed with reference to the fuel contract information database DB3, the market information database DB4, the fuel ship and tank device information database DB5, and the fuel ship initial ship allocation planning information database DB6.

Here, in order to construct the fuel operation plan, a method will be described that approximates a relationship between the power trading amount in the power market and the fuel consumption amount, and determines the fuel trading amount in the fuel market and the route such as the destination of the fuel ship.

First, the relationship between the power trading amount in the power market 31 and the fuel consumption amount will be described. What is traded in the power market 31 is generated power and is not fuel. Therefore, in order to consider trading of the power market 31 in the fuel operation plan, it is necessary to clarify the relationship between the generated power and the fuel.

This relationship is approximated based on power generator output Pt, a fuel consumption amount Qit per unit time, and a power market price (power generation unit price) λ. The power generator output Pt and the fuel consumption amount Qit per unit time can be approximated by Formula (1). αi and βi are coefficients and are linear functions in Formula (1), and may be quadratic functions or piecewise linear functions. In addition, i is a symbol for distinguishing power generators.

[Math 1] $Qit = αiPt + βi$

Formula (2) is obtained by assuming a change ΔQit in the fuel consumption amount when the power generator output changes by ΔPt for Formula (1) and arranging Formula (1).

[Math 2] $ΔPt = \left(ΔQit-βi\right) / αi$

In Formula (2), when power is traded by ΔPt at the market price λ in the power market 31, the following formula is obtained.

[Math 3] $λΔPt = λ \left(ΔQit-βi\right) / αi$

A fuel change due to thermal power output being adjusted by ΔPt through power trading in the power market and a profit λΔPt obtained by a power sale are derived from Formula (3). Instead of the power market price λ, a power generation unit price λi of each power generator i calculated based on the output of each power generator and characteristics of the power generator may be used. The output of each power generator is calculated by the fuel-unconsidered power generation planning unit 12a in processing step S1. In this case, a cost change is caused by adjusting the output of each power generator.

Next, a method for adjusting a route such as a destination of a fuel ship will be described. A method for creating a route of a ship will be described with reference to an example of a document (Takahiro Seta, "Ship scheduling optimization using mathematical programming techniques for coastal shipping with maximal fleet size in Japan", Journal of the Japan Society of Naval Architects and Ocean Engineers, Vol.11, pp 157-164, 2010).

A method called a column generation method, which consists of a subproblem and a main problem, is applied to creation of a route of a ship. In a subproblem, route candidates of a ship passing through a plurality of ports and having the lowest cost are created in consideration of only one ship. In a main problem, one route is selected for each ship to satisfy an operational constraint based on a large number of route candidates of the ship created in the subproblem so far.

The operational constraints of the ship include a limitation on the number of ships that can be anchored at a port. When a violation of the operational constraint occurs in the main problem, a route to mitigate the violation related to time and port in the main problem is created in the subproblem, and the main problem is iteratively executed. By repeating the creation of route candidates for each ship to mitigate the violation of the operational constraint in the subproblem and the selection of the route that satisfies the operational constraint in the main problem, the route of the ship having the lowest cost without violation of the operational constraint is finally created.

Since the document of Seta describes a method for creating a route of a ship based on an order (transportation request), a fuel tank is not considered. For consideration, as an example, the port is not a movable order destination in the subproblem (as described above in the above description) but a port to which a ship can move, and the main problem may be set as follows.

With respect to symbols used in the following formulas, Xvr ∈ {0, 1} means selection of a route candidate, v means a ship number, r means a route candidate number, t means a time point, and i means a port number. In addition, Cvr is a route transportation cost, Qitvr is a fuel amount (0 or a loading amount of a ship) replenished from a ship v to a tank of a port i at a time point t in a route candidate r, Vcsp_it is a fuel consumption amount at the port i and the time point t, Σv,r is a sum of the number of ships and a sum of route candidates of the ship.

First, the main problem in this case is to minimize a sum of transportation costs of all the ships, and an objective function is expressed by Formula (4).

[Math 4] ${min}_{{X}_{vr}} {\sum }_{v , r} {C}_{vr} {X}_{vr}$

Three items as follows are considered to be an operational constraint. For the first item, the remaining amount of the tank is set to be within the maximum or minimum capacity, which is defined according to each fuel tank and each time point. Formula (5) is an expression of this operational constraint. In Formula (5), Vmin_i represents a minimum capacity, Vmax_i represents a maximum capacity, and a central term represents a remaining amount of a tank.

Here, since liquid fuel such as LNG or LPG is assumed, a tank is exemplified as a storage facility for the liquid fuel. However, in a case of solid fuel such as coal, for example, a coal yard is a storage facility. In the latter case as well, a limitation on the maximum or minimum capacity in terms of area or remaining amount is considered for a storage amount, and can be considered in the same manner as in the case of the fuel tank. In the following description, the tank will be described as an example.

[Math 5] ${V}_{min _ i} < {V}_{init _ i} + {\sum }_{m = 1}^{t} {\sum }_{v , r} {Q}_{imvr} {X}_{vr} + {\sum }_{m = 1}^{t} {V}_{csp _ im} < {V}_{max_ i}$

The second item of the operational constraint is to select one route candidate from among route candidates for one ship, and it is necessary to satisfy Formula (6).

[Math 6] ${\sum }_{r} {X}_{vr} \leq 1$

The third item of the operational constraint is that the fuel consumption is within a range of the total target fuel consumption amount, and is defined according to the fuel supplier and a final time point. In Formula (7), the range of the total target fuel consumption amount is between Vsummin_i and Vsummax_i.

[Math 7] ${V}_{summin_ i} < {\sum }_{m = 1}^{T} {\sum }_{v , r} {Q}_{imvr} {X}_{vr} < {V}_{summax_ i}$

By using the above, it is possible to perform more economic fuel operations through a fuel tank, which has a different destination of a fuel ship that transports fuel, selling the fuel loaded on the fuel ship and supplying the fuel to the fuel tank of another consumer, and power trading (Formula (3)) in the power market.

For the above formulas, by adding the power trading in the power market according to Formula (3) to Formulas (4) and (5), Formulas (8), (9), and (10) are obtained as follows and the power market can be considered. The main problem in this case is to obtain a solution of an objective function in consideration of power trading, an optimization problem called a mixed integer programming problem exemplified in Formula (8) is handled, and an optimization solution can be calculated using a commercial solver.

[Math 8] ${min}_{{X}_{vr}} {\sum }_{v , r} {C}_{vr} {X}_{vr} + {\sum }_{m = 1}^{T} {\sum }_{i} {λ}_{m} \left({ΔQ}_{im}-{β}_{i}\right) / {α}_{i}$

As an operational constraint in this case, two items as follows are considered. For the first item, the remaining amount of the tank is set to be within the maximum or minimum capacity, which is defined according to each fuel tank and each time point. Formula (9) is an expression of this operational constraint. In Formula (9), Vmin_i represents a minimum capacity, Vmax_i represents a maximum capacity, and a central term represents a remaining amount of a tank.

[Math 9] ${V}_{min _ i} < {V}_{init _ i} + {\sum }_{m = 1}^{t} {\sum }_{v , r} {Q}_{imvr} {X}_{vr} + {\sum }_{m = 1}^{t} {V}_{csp _ im} + {\sum }_{m = 1}^{t} Δ {Q}_{im} < {V}_{max_ i}$

For the second item, the trading amount in the power market is set to be within a maximum or minimum range, and Formula (10) is an expression of this operational constraint. In Formula (10), Pemarket_min_t represents a minimum trading amount, Pemarket_max_t represents a maximum power sales amount, and a central term represents a power sales amount.

[Math 10] $Pemarket_min_t < \sum i \left(ΔQim-βi\right) / αi < Pemarket_max_t$

Further, in a subproblem, the route candidates of the ship passing through the plurality of ports and having the lowest cost are created in consideration of fuel resale as well. For this creation, a network diagram of FIG. 4 is used. In FIG. 4, a port having a fuel tank at which a ship can move at such a time and a supply location are connected by an arrow.

In the network diagram of FIG. 4, a horizontal axis represents time and a vertical axis represents a port number. Here, ports 0 and 1 indicated by ∘ are fuel supply locations (ports) where fuel is loaded, and ports 2, 3, and 4 indicated by • are fuel tank locations (ports) where fuel is put into the tank. In this example, the ship is anchored at the port 1 when a current position is an initial position. After the fuel is loaded, the ship goes to any one of the fuel tank locations (ports) 2, 3, and 4, and it takes time to go to the port 3 at a remote location. After unloading the fuel at the fuel tank locations (ports) 2, 3, and 4, the ship goes to one of the fuel supply locations (ports) 0 and 1 in order to load fuel again. Thereafter, this process is repeated.

Here, a length of an arrow also changes depending on a length of transportation between the ports (2, 3, 4) having fuel tanks and the supply locations (0, 1), and a transportation cost Cii is assigned to the arrow. When there is a constraint violation such as excess of the remaining amount of the tank in the main problem, it is assumed that, for a transportation related to the constraint violation, the transportation cost is corrected and constraint resolution is promoted. In creation of a route candidate of a ship, a route candidate is created by connecting arrows in which a sum ΣCii = Cvr of the transportation cost Cii from a port to a port in FIG. 4 is minimized using a general optimization method such as the Bellman-Ford algorithm.

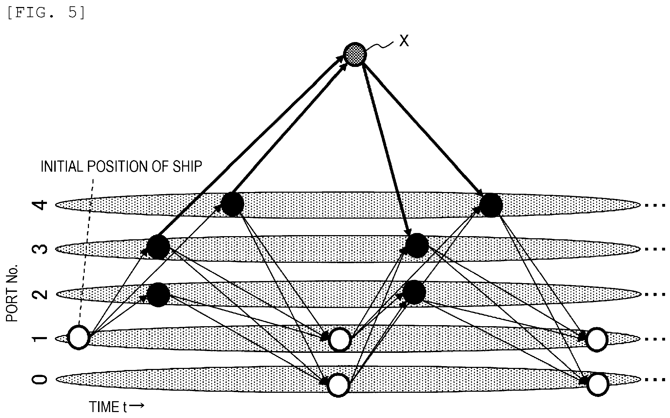

In FIG. 4, the transportation cost is calculated based on only an assumption that fuel is transported between ports by a ship. FIG. 5 further shows that when a part of fuel is purchased, the part of fuel is also indicated on the drawing and is considered to be a target to be discussed.

In FIG. 5, X represents a case in which the fuel loaded on the fuel ship is sold through the fuel market and the fuel is supplied to the fuel tank of another consumer. In this case, as shown in FIG. 5, a fuel trading destination is virtually set and defined as a port, and a fuel trading cost is virtually set and defined instead of the transportation cost. For example, the fuel trading cost is calculated as fuel purchase cost at a supply location - fuel sale price + transportation cost. Fuel sales in FIG. 5 are assumed and described, and a virtual purchase destination from the fuel tank may be created as a port of a transportation destination in a case of purchasing.

According to the above, by defining the fuel trading cost, in a case in which fuel trading is cheaper than fuel supply to the fuel tank, the route candidate in which the fuel trading is selected is created in a process of connecting the arrows in which a sum of cost from a port to a port is minimized at a time of creating the route candidate. By adding this route candidate to the route candidates considered in the main problem, it is possible to consider the fuel trading.

As described above, by creating route candidates having the minimum cost in consideration of the fuel trading in the subproblem and solving the main problem in consideration of the remaining amount of the tank and power market trading as in Formulas (8), (9), (10) and the like, it is possible to create (adjust) the trading amount in the fuel market, the trading amount in the power market, and routes of the ship under a constraint that the remaining amount of the fuel tank is maintained.

Returning to FIG. 3, in processing step S4, the fuel-considered power generation planning unit 14 constructs the power generation plan in consideration of the trading amount in the power market as a result of processing step S3, an adjustment of the destination of the ship to the fuel tank, and the fuel consumption constraint based on the trend of the remaining amount of the tank to which the fuel trading is added.

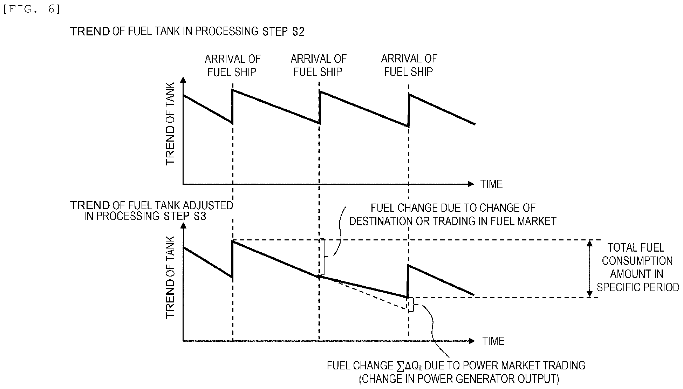

FIG. 6 shows an example of the trend of the fuel tank based on the result of processing step S3. According to an output adjustment of the thermal power generator due to the change of destination of the fuel ship or the trading in the power market, the trend of consumption is changed as compared with processing step S2. According to processing up to processing step S2, the remaining amount of the tank recovers by a constant value each time the fuel ship arrives. However, when the result of processing step S3 is reflected, the arrival of the fuel ship is delayed for a specific period and the remaining amount of the tank is further reduced, but a fuel change due to power market trading can be expected.

In FIG. 6, when the power generation plan is constructed again, for example, in a specific period such as before and after the arrival of the fuel ship in the drawing, the constraint is specified such that a range of the total fuel consumption amount becomes the same, and tvhe power generation plan is constructed. The power generation plan in consideration of a fuel constraint can be constructed by applying the method in Non-Patent Literature 1. Here, the range of the total fuel consumption amount is considered an amount in consideration of trading in the power market as well, but when the power generation plan is constructed, the range of the total fuel consumption amount may be specified alone while the trading amount in the power market may not be specified. This is because, by creating the power generation plan within the specified range of the fuel consumption amount, generation power according to the fuel change is consequently traded in the power market in order to reduce the power generation cost, or the power generation plan is created according to a cheaper method.

In processing step S5, the result of fuel trading in the fuel operation in processing step S3 and the result of the power generation plan in consideration of the fuel constraint in processing step S4 are displayed on the screen and stored in the database. In the screen display, it may be possible to compare and display change points of the power generation plan and the route of the ship adjusted in consideration of a final route of the ship or the fuel market in processing step S4, and the power generation plan, the trend of fuel consumption, a predetermined initial route of the fuel ship, and the trading amount in the fuel market in processing steps S1 and S2.

The market price in the power market is determined in a unit of 30 minutes, but the price in the fuel market is determined in a unit of one month. According to the market price in the power market, a shorter calculation time interval leads to a longer computation time. Therefore, in the market/ship allocation/thermal power output adjustment planning unit in processing step S3, it is necessary to accurately consider the power market price at a short time interval even at a long calculation time interval.

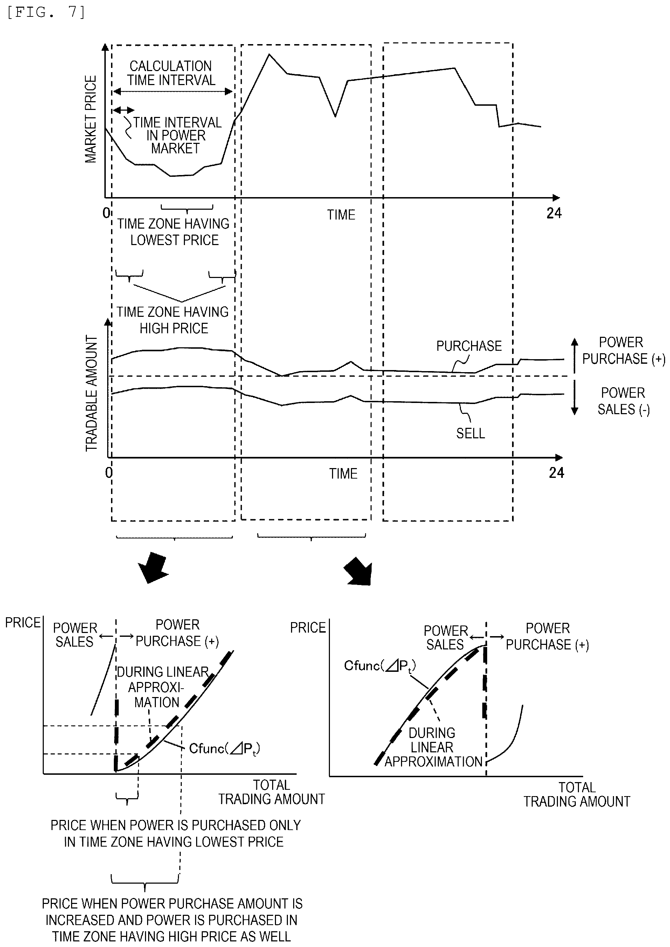

FIG. 7 shows an example of characteristics according to the trading amount and the market price in the power market. In an upper part of FIG. 7, the market price in 24 hours is illustrated. A power price tends to be low in the daytime in which surplus power is generated due to an increase in output of photovoltaic generations with respect to a power demand, and the power price tends to be high at nighttime without the output of the photovoltaic generations. In a middle part of FIG. 7, a tradable power amount in 24 hours is illustrated. In the daytime in which the supply tends to exceed the demand, purchase of a tradable amount tends to increase and sale of the tradable amount tends to decrease due to excessive supply in the market, and at nighttime in which the supply tends to fall below the demand, the purchase of the tradable amount tends to decrease and the sale of the tradable amount tends to increase due to insufficient supply in the market. In order to consider the power market price and the tradable amount that change in a time shorter than the calculation time interval at a long calculation time interval, the characteristics can be approximated only by a price according to an amount and a frequency without considering a time of occurrence. For example, the power market price and frequency distribution (histogram) or a load duration curve (duration curve) in a total power sales amount occur in each interval of the long calculation time interval. In a lower part of FIG. 7, a diagram of an example in which the characteristics are approximated only by the total trading amount and the price without considering the time of occurrence is shown for each calculation interval. In an example in a lower left part of FIG. 7, when the trading amount is small, the price is low since power is purchased only at the time having the lowest price in the upper part of FIG. 7, but when the power sales amount increases, the price increases since power sold in other time zones is increased. The approximated characteristics Cfunc() is a function of Formula (11) indicating characteristics according to the total trading amount and the market price.

[Math 11] $λt = Cfunc \left(ΔPt\right)$

By substituting Formula (12), which is obtained by substituting Formula (2) into Formula (11) described above, into λt in the above-described main problem, it is possible to consider the trading in the power market with high accuracy even at a long calculation time interval.

[Math 12] $λt = Cfunc \left(\left(ΔQit-βi\right)/α\right)$

In a case in which it is determined whether power sales or power purchase is performed based on time, linear approximation is performed as indicated by thick broken lines in the characteristics in the lower part of FIG. 7, and sufficient accuracy is also attained in Formula (13) as follows. ζ is a coefficient obtained by linear approximation.

[Math 13] $λt = ζ \left(ΔQit-βi\right) / α$

According to the first embodiment, the trend of fuel consumption, the power market price (the power generation unit price of the power generator), a fuel trading price in the fuel market, and the transportation cost of the ship, which are calculated according to the power generation plan without considering the fuel consumption, are received as input, and the relationship between the fuel consumption amount and the power trading amount and the cost associated with the market trading of the fuel are set as a virtual transportation destination (port). Accordingly, the route adjustment of the ship, the trading amount in the fuel market, and the trading amount (an output adjustment amount of the power generator) in the power market, with which the economic efficiency can be improved under a constraint that the fuel tank is maintained, are calculated as a solution of the optimization problem.

Based on the result of the fuel operation plan, the power generation plan is constructed in consideration of the fuel consumption constraint. As an effect, by dividing the fuel operation plan and the power generation plan, scale of the optimization problem is reduced, and the computation time to construct both of optimized plans can be speeded up. Also, by approximating the relationship between the fuel consumption amount and the power trading amount in the fuel operation plan, it is possible to consider a change in the power generation cost associated with the fuel in the fuel operation plan, and it is possible to improve economic efficiency in consideration of an interaction between the fuel operation plan and the power generation plan.

In the screen display, for the results of the above-described fuel operation plan and the power generation plan reflecting the fuel operation plan with respect to an initial plan, the change points of the route of the ship, the fuel trading amount, and the trading amount (power generator output) in the power market are compared to clearly indicate change points with respect to the initial plan for an operator. Based on the change points, the fuel operation plan and the power generation plan are reconstructed by reflecting a part of the change points in determination of the operator, so that the fuel operation plan and the power generation plan can be more suitable for requests of the operator.

Further, for the market price in the power market set at a time interval shorter than the calculation time interval at which the trading in the fuel market and the adjustment of the destination of the fuel ship are calculated, in order to accurately simulate the power market price at a short time interval even at a long calculation time interval, market price characteristics according to the total trading amount during each long calculation time interval are used. Accordingly, it is possible to accurately simulate the market price in the power market even at the long calculation time interval, and it is possible to speed up the calculation.

### [Second Embodiment]

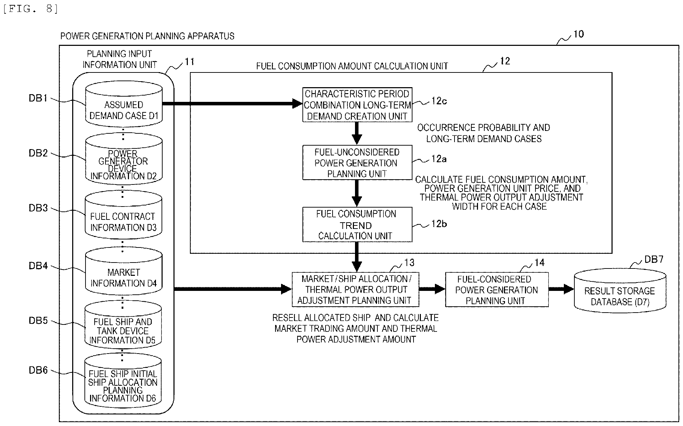

A second embodiment of the invention will be described with reference to FIGS. 8 to 11. FIG. 8 is a diagram showing a software configuration example of a power generation planning apparatus according to the second embodiment of the invention. In the case in FIG. 8, a difference from the configuration example according to the first embodiment shown in FIG. 1 is that a characteristic period combined long-term demand creation unit 12c is added to the fuel consumption amount calculation unit 12.

The newly added characteristic period combined long-term demand creation unit 12c receives assumed demand cases from the planning input information unit 11 and combines demands divided in specific periods to create a plurality of combined long-term demand cases and calculate occurrence probabilities thereof. In the case according to the first embodiment, the forecast period is, for example, three months, but in the case of the long-term demand according to the second embodiment, one year of spring, summer, autumn, and winter is assumed.

The fuel-unconsidered power generation planning unit 12a constructs a power generation plan in each combined long-term demand case of the characteristic period combined long-term demand creation unit 12c, and constructs an operation such as output or operation and stop of a power generator. The fuel consumption trend calculation unit 12b calculates the trend of fuel consumption for each combined long-term demand case. The market/ship allocation/thermal power output adjustment planning unit 13 adjusts or changes a power trading amount in a power market, a fuel trading amount in a fuel market, and a route such as a destination of a fuel ship such that economic efficiency can be improved with a remaining amount of a fuel tank within a maximum or minimum capacity even when a total fuel consumption amount is consumed and the trend of fuel consumption varies only in the combined long-term demand cases.

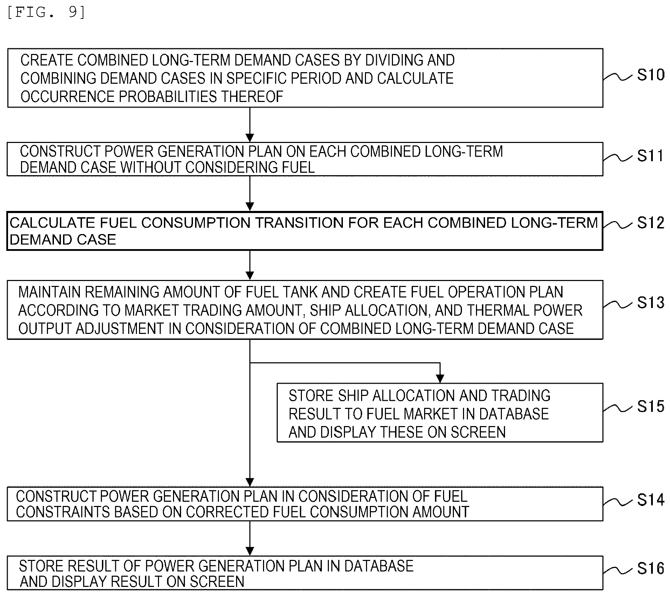

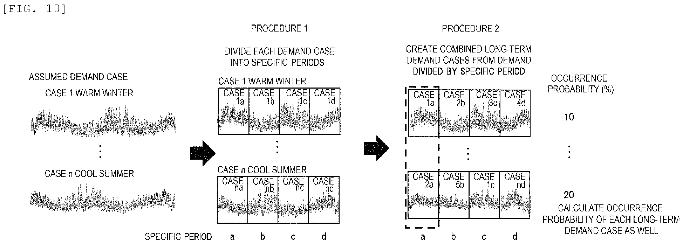

FIG. 9 is a flowchart showing entire processing of the power generation planning apparatus 10 according to the second embodiment. In first processing step S10 in FIG. 9, the characteristic period combined long-term demand creation unit 12c creates the plurality of combined long-term demand cases and calculates occurrence probabilities thereof based on demand cases such as past demand records. A method for creating the combined long-term demand cases will be described with reference to FIG. 10.

On a left side of FIG. 10, a plurality of (here, n) sets are assumed as the assumed demand cases. A case 1 is a past case in a warm winter, and is, for example, a data group in which a power demand for one year is held in time series. A case n is a past case in a cool summer, and is a data group in which the power demand for one year is held in time series in the same manner.

For these n past cases, in a procedure 1, each past demand case is divided into, for example, specific periods a, b, c, and d of three months as a season, and for example, the case 1 is divided into 1a, 1b, 1c, and 1d for each season. Similarly, the case n is divided into na, nb, nc, and nd for each season.

As a procedure 2, for each of the specific periods a, b, c, and d, one demand of the specific period corresponding to any demand case is extracted, and the extracted demands are connected for each specific period to create a plurality of combined long-term demand cases. In the case at the top of the procedure 2 shown in the drawing, a one-year change including 1a, 2b, 3c, and 4d is assumed for each specific period, and in the case at the bottom of the procedure 2, a one-year change including 2a, 5b, 1c, and nd is assumed for each specific period. When the demand becomes discontinuous at a joint of the specific period, filtering processing may be applied in consideration of a variation component of the demand.

According to this combination method, when the number of cases of the combined long-term demand cases becomes enormous, it is preferable to calculate weights (priority order) of the cases based on a probability of which case occurs as an actual demand. Here, a case having a fairly low occurrence probability may be excluded. The occurrence probability of each combined long-term demand case is classified into multiple classes in consideration of a probability that the actual demand is classified into which combined long-term demand case (class) to what extent of probability, and a method such as a relevance vector machine or deep learning may be used. A document (C. M. Bishop, "Pattern Recognition and Machine Learning, Volume 1, Statistical Forecast based on Bayes Theorem", Maruzen Publishing Co., Ltd., pp.56-67 (2012)) can be used as one example of the relevance vector machine.

When machine learning such as the above-described relevance vector machine is used, it is necessary to give a result corresponding to certain input when receiving the input in advance and to learn relevance between the input and the result. In this learning, for a past demand record, the relevance between the input and the result is learned by giving, as the input, a temperature, the amount of clouds, weather, atmospheric pressure, humidity, a precipitation amount, a solar radiation amount, and the like in a situation in which the past demand record occurred. In the case of calculating the occurrence probabilities of the combined long-term demand cases described above, the occurrence probabilities are obtained through learning results when records up to the current day such as the temperature, the amount of clouds, the weather, the atmospheric pressure, the humidity, the precipitation amount, and the solar radiation amount, and subsequent forecasts are received as the input. The combined long-term demand case and the demand as described above may be a demand that is reduced due to a power generation amount of renewable energy.

Referring back to FIG. 9, in processing step S11, as in processing step S1 in FIG. 1, the fuel-unconsidered power generation planning unit 12a constructs the power generation plan on each combined long-term demand case without considering the fuel consumption constraint, and calculates the operation and stop and output of the power generator in each case. In processing step S12, the trend of a fuel consumption amount is calculated based on power generator output in each case in processing step S11.

In processing step S13, the market/ship allocation/thermal power output adjustment planning unit 13 calculates a route adjustment of a ship, the trading amount in the fuel market, and the trading amount in the power market (an output adjustment amount of the power generator), which can improve the economic efficiency, in consideration of the fuel consumption trend for each combined long-term demand case and the occurrence probability thereof.

Further, in the processing of processing step S13, a base case and a variation case are assumed for the combined long-term demand cases. Among these cases, maintenance of the fuel tank is preferentially considered for the base case, and minimization of a deviation amount of the tank is considered for the variation case. Here, the base case means that the processing is performed from the same viewpoint as that according to the first embodiment, and is, for example, an expected value of the fuel consumption trend calculated based on the fuel consumption trend and the occurrence probability thereof for each combined long-term demand case.

On the other hand, the variation case in which the deviation amount of the tank is also minimized can be implemented by solving an optimization problem in consideration of a variation as shown in Formula (14) and subsequent formulas. Only a difference from the first embodiment is described in Formula (14) and subsequent formulas, and an evaluation term of the variation case is applied to a main problem.

In the following formulas, indications of symbols are as follows. First, Vcsp_it_base is an expected value of a fuel consumption amount in the base case at a port i and a time point t, Vcsp_it_bolatile s is a fuel consumption amount in a variation case s at the port i and the time point t, ΔQit_base is a fuel consumption amount in a short time in the power market in the base case at the port i and the time point t, ΔQit_s is a fuel consumption amount in a short time in the power market in the variation case s at the port i and the time point t, Vcsp_it_slk s is a tank excess amount in the variation case s at the port i and the time point t, Ps is an occurrence probability of the variation case s, λs is a market price (power generation unit price) in the variation case, and γ is a ratio (γ > 0) in consideration of the variation case.

The main problem in the variation case is to obtain a solution of an objective function in consideration of the deviation amount of the tank in the variation case, and the objective function can be expressed by Formula (14). Formula (14) is obtained by adding a second term (power trading evaluation at a variation time) and a third term (tank deviation evaluation at the variation time) as the evaluation term of the variation case to Formula (4) which is the objective function according to the first embodiment.

[Math 14] ${min}_{{X}_{vr}} {\sum }_{v , r} {C}_{vr} {X}_{vr} + {\sum }_{m = 1}^{T} {\sum }_{i} \left(λ\left({ΔQ}_{im base}-{β}_{i}\right)/{α}_{i}+{\sum }_{s} {P}_{s} {λ}_{m s} \left({ΔQ}_{im s}-{β}_{i}\right) / {α}_{i}\right) + γ {\sum }_{m = 1}^{T} {\sum }_{i , s} \left({P}_{s}\left|{V}_{csp _ im _ slk s}\right|\right)$

In this case, three items are assumed as an operational constraint. The first item is that the remaining amount of the tank in the base case is within the maximum or minimum capacity, and is expressed by Formula (15).

[Math 15] ${V}_{min _ i} < {V}_{init _ i} + {\sum }_{m = 1}^{t} {\sum }_{v , r} {Q}_{imvr} {X}_{vr} + {\sum }_{m = 1}^{t} {V}_{csp _ im _ base} + {\sum }_{m = 1}^{t} {ΔQ}_{im _ base} < {V}_{max _ i}$

The second item of the operational constraint is compliance of a deviation amount Vcsp_im_slk s of the maximum or minimum capacity of the remaining amount of the tank in the variation case, and is expressed by Formula (16). Thus, in order to consider the deviation amount of the remaining amount of the tank in the variation case, the remaining amount of the tank in the fuel consumption trend for each fluctuation case is defined according to Formula (16) in the operational constraints, and the deviation amount is represented by Vcsp_im_slk s in the case of deviation. Formula (16) is obtained by setting a central remaining amount of the tank to be within a range between the maximum capacity and the minimum capacity. In Formula (16), a value obtained by weighting the deviation amount Vcsp_im_slk s for each demand case with the occurrence probability is evaluated using the objective function.

[Math 16] $\begin{matrix}{V}_{min _ i} < {V}_{init _ i} + {\sum }_{m = 1}^{t} {\sum }_{v , r} {Q}_{imvr} {X}_{vr} + {\sum }_{m = 1}^{t} \left({V}_{csp _ im _ volatile 1}+{V}_{csp _ im _ slk 1}\right) + {\sum }_{m = 1}^{t} {ΔQ}_{im _ 1} < {V}_{max _ i} \\ ⋮ \\ {V}_{min _ i} < {V}_{init _ i} + {\sum }_{m = 1}^{t} {\sum }_{v , r} {Q}_{imvr} {X}_{vr} + {\sum }_{m = 1}^{t} \left({V}_{csp _ im _ volatile s}+{V}_{csp _ im _ slk s}\right) + {\sum }_{m = 1}^{t} {ΔQ}_{im _ s} < {V}_{max _ i}\end{matrix}$

The third item of the operational constraint is that the trading amount in the power market is within the range between the maximum capacity and the minimum capacity, and is expressed by Formula (17). The trading amount in the power market can be changed until a previous day while the trading amount in the fuel market is determined after several months, and thus the trading amount in the power market can be changed in the variation case. In Formula (17), a central power sales amount is set to be within a range between a maximum power sales amount and a maximum power sales amount.

[Math 17] $\begin{matrix}{P}_{emarket _ min 1 _ t} < {\sum }_{i} \left({ΔQ}_{im _ 1}-{β}_{i}\right) / {α}_{i} < {P}_{emarket _ max 1 _ t} \\ ⋮ \\ {P}_{emarket _ min s _ t} < {\sum }_{i} \left({ΔQ}_{im _ s}-{β}_{i}\right) / {α}_{i} < {P}_{emarket _ max s _ t}\end{matrix}$

In the above formula, since the deviation amount Vcsp_im_slk of the remaining amount of the tank in the base case is not considered, the deviation amount of the variation case is minimized while complying with the remaining amount of the tank in the base case. When the fuel consumption amount in the variation case is smaller than that in the base case, there is an effect of adjusting a destination or the like of the fuel ship in order to reduce the deviation amount of the variation case within a range in which the remaining amount of the tank in the base case is satisfied using power market trading as well.

The term for evaluating the deviation amount in the variation case of the objective function includes a coefficient γ, and the larger the coefficient is, the more the variation case is considered. In screen display in processing step S16 to be described later, a change in a result associated with magnitude of a variation can be clarified by being compared with a change in a result associated with magnitude of γ.

In processing step S15, ship allocation in processing step S13 and a power sales result to the fuel market are displayed on a screen and stored in a database.

In processing step S14, similarly to the first embodiment, the fuel-considered power generation planning unit 14 constructs the power generation plan in consideration of the demand of the base case as a result of processing step S13, the trading amount in the power market, the adjustment of the destination of the ship to the fuel tank, and the fuel consumption constraint based on the trend of the remaining amount of the tank to which fuel trading is added.

The base case is taken as a target of the power generation plan. However, in a case in which a variation case is also considered, the power generation plan can be constructed by applying a literature (Takayuki Shiina, "Probability Programming", Asakura Publishing Co., Ltd., pp 99-110 (2015)) and a literature (Tsutomu Oyama, "Development of New Algorithm for Unit Commitment Considering Fuel Constraint", 1995-1997 Research Report of Grant-in-Aid for Scientific Research (Basic Research (B) (2)), Project No. 07455118).

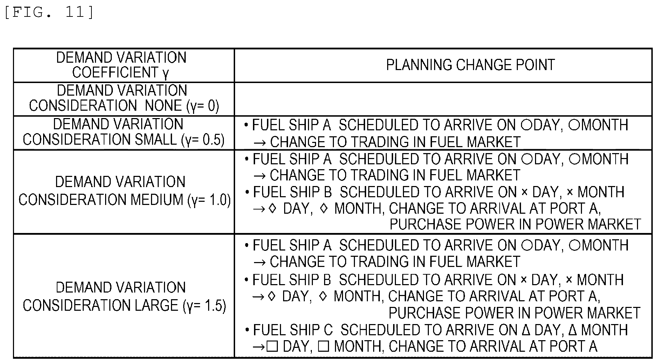

In processing step S16, a fuel trading result in the fuel operation and a power generation plan result in consideration of the fuel constraint in processing step S14 are displayed on the screen and stored in the database. Screen display in this case is preferably a display example in FIG. 11. In FIG. 11, a plurality of cases in which a demand variation coefficient γ includes γ = 0 are recalled, and how planning change points at a value of each γ are compared with a schedule before the change is specifically described.

Thus, in addition to the screen display according to the first embodiment, in the second embodiment, as a result of not considering the variation according to the first embodiment, comparison according to the magnitude of the variation consideration according to the second embodiment is shown as in FIG. 11, so that a tendency of a destination adjustment or the like of a fuel ship, which is changed associated with the magnitude of variation consideration α, may be displayed.

According to the second embodiment, a combined long-term demand case in which specific periods are combined is created based on renewable energy and demand cases such as past demand records to be received as input. Demand and sunlight often tend to occur in each specific period, and it is possible to assume a past demand or a long-term demand that does not have a demand record of sunlight depending on the combination. Further, by considering an occurrence probability, a case that is likely to occur can be prioritized. As a method for considering a plurality of demand cases, there is a method such as Monte Carlo simulation, but when the demand is forecasted for a long period of time, forecast accuracy or uncertainty is higher as time elapses, and demand cases may become enormous. The characteristic period combined long-term demand creation unit can greatly reduce the demand cases as compared with the Monte Carlo simulation and can reduce the computation time by creating the demand cases depending on the combination.

Based on the trend of a fuel consumption amount for each combined long-term demand case described above, the market, ship allocation and thermal power output adjustment planning unit 13 calculates a base case, and minimizes a deviation amount of a fuel tank when a variation case occurs based on compliance with the fuel tank in the base case. Accordingly, it is possible to consider a case in which a total fuel consumption amount increases or decreases, such as an increase or a decrease in demand variation during a warm winter or a cool summer with reference to the base case, and it is possible to create a fuel operation plan, such as the destination adjustment of the fuel ship, in which redundancy of the demand variation is included in the base case.

In terms of the screen display, there is an effect of clarifying a change with respect to magnitude of demand variation by displaying the destination of the fuel ship, a trading amount in a power market, and the like for each magnitude in consideration of the variation case.

### Reference Signs List

10 power generation planning apparatus
11 planning input information unit
12 fuel consumption amount calculation unit
12a fuel-unconsidered power generation planning unit
12b fuel consumption trend calculation unit
12c characteristic period combined long-term demand creation unit
13 market/ship allocation/thermal power output adjustment planning unit
14 fuel-considered power generation planning unit

## Claims

1. A power generation planning apparatus (10) comprising:
a fuel-unconsidered power generation planning unit (12a) that is configured to construct an operation plan for output and operation and stop of a power generator according to demand and supply forecast in a power system;
a fuel consumption trend calculation unit (12b) that is configured to calculate a trend of fuel consumption based on the operation plan;
a market/ship allocation/thermal power output adjustment planning unit (13) that is configured to determine, under a constraint that a remaining amount of fuel satisfies a predetermined range based on the calculated fuel consumption, at least one of ship allocation including a route of a fuel ship, a trading amount in a fuel market, a power sales amount in a power market, and an adjustment amount of output of the power generator; and
a fuel-considered power generation planning unit (14) that is configured to construct a power generation plan based on an adjustment amount of a fuel consumption amount, which is based on the power sales amount in the power market and the adjustment amount of the output of the power generator, and the trend of fuel consumption obtained by the fuel consumption trend calculation unit (12b),
**characterised in that**
the fuel-unconsidered power generation planning unit (12a) is configured to construct the operation plan for output and operation and stop of the power generator without considering fuel used in the power generator.

2. The power generation planning apparatus (10) according to claim 1, wherein
the market/ship allocation/thermal power output adjustment planning unit (13) is configured to adjust the power sales amount in the power market or the output of the power generator under a constraint that the remaining amount of the fuel is maintained in the predetermined range by a cost change that is caused by adjusting a unit fuel consumption amount calculated based on fuel consumption characteristics according to a power market price or a power generation unit price based on the operation plan constructed by the fuel-unconsidered power generation planning unit (12a) and the output of the power generator.

3. The power generation planning apparatus (10) according to claim 1 or 2, wherein
the market/ship allocation/thermal power output adjustment planning unit (13) is configured to determine ship allocation such as the route of the fuel ship and the trading amount in the fuel market by taking a power sales destination in the fuel market as a virtual port and taking, as a cost of a route from a certain port to the virtual port, a fuel trading cost including a fuel purchase cost, a fuel sales profit, and a transportation cost.

4. The power generation planning apparatus (10) according to any one of claims 1 to 3, further comprising:
a characteristic period combined long-term demand creation unit (12c) that is configured to divide each of a plurality of assumed demand cases of power into n specific periods, combine the divided n periods to create a plurality of combined long-term demand cases, and calculate an occurrence probability for each of the created combination long-term demand cases, wherein
the combined long-term demand cases created by the characteristic period combined long-term demand creation unit (12c) are given to the fuel-unconsidered power generation planning unit (12a) as the demand and supply forecast in the power system.

5. The power generation planning apparatus (10) according to any one of claims 1 to 4, wherein
the market/ship allocation/thermal power output adjustment planning unit (13) is configured to create a base case and a variation case based on the trend of the fuel consumption amount calculated for each case of the demand and supply forecast of the power and an occurrence probability of the case, comply with the remaining amount of the fuel to the predetermined range in the base case, minimize a deviation amount of the remaining amount of the fuel in the variation case, and display a result in the base case and the variation case on a screen.

6. The power generation planning apparatus (10) according to any one of claims 1 to 5, wherein
in calculation executed by the market/ship allocation/thermal power output adjustment planning unit (13), a price of the power market or the like set at a time interval shorter than a calculation time interval is simulated by setting a price change within the calculation time interval at each calculation time interval as a price characteristic according to the price and a total trading amount within the interval.

7. The power generation planning apparatus (10) according to claim 5, wherein
the market/ship allocation/thermal power output adjustment planning unit (13) is configured to output, according to a ratio in which the variation case is considered, the ship allocation such as the route of the fuel ship, the trading amount in the fuel market and the power sales amount in the power market or the adjustment amount of the output of the power generator, and compare and display a difference in an output result that changes according to the ratio.

8. A power generation planning method comprising:
constructing an operation plan for output and operation and stop of a power generator according to demand and supply forecast in a power system;
calculating a trend of fuel consumption based on the operation plan;
determining, under a constraint that a remaining amount of fuel satisfies a predetermined range based on the calculated fuel consumption, at least one of ship allocation including a route of a fuel ship, a trading amount in a fuel market, a power sales amount in a power market, and an adjustment amount of output of the power generator; and
constructing a power generation plan based on an adjustment amount of a fuel consumption amount, which is based on the power sales amount in the power market and the adjustment amount of the output of the power generator, and the trend of fuel consumption,
**characterised in that**
the construction of an operation plan for output and operation and stop of a power generator occurs without considering fuel used in the power generator.

## Patentansprüche

1. Stromerzeugungsplanungsvorrichtung (10), umfassend:
eine Kraftstoff nicht berücksichtigende Stromerzeugungsplanungseinheit (12a), die dazu ausgelegt ist, einen Betriebsplan zum Ausgeben und Betreiben und Anhalten eines Stromgenerators gemäß einer Angebot- und Nachfrageprognose in einem Stromsystem zu erstellen;
eine Kraftstoffverbrauchstendenzberechnungseinheit (12b), die dazu ausgelegt ist, eine Kraftstoffverbrauchstendenz basierend auf dem Betriebsplan zu berechnen;
eine Markt-/Schiffszuweisungs-/Wärmeleistungsausgabeanpassungsplanungseinheit (13), die dazu ausgelegt ist, unter der Einschränkung, dass eine restliche Menge an Kraftstoff einen vorbestimmten Bereich basierend auf dem berechneten Kraftstoffverbrauch befriedigt, zumindest eines aus einer Schiffszuweisung, die eine Route eines Kraftstoffschiffs umfasst, einer Handelsmenge auf einem Kraftstoffmarkt, einer Stromabsatzmenge auf einem Strommarkt und einem Anpassungsausmaß der Leistungsabgabe des Stromgenerators zu bestimmen; und
eine Kraftstoff berücksichtigende Stromerzeugungsplanungseinheit (14), die dazu ausgelegt ist, einen Stromerzeugungsplan basierend auf einem Anpassungsausmaß einer Kraftstoffverbrauchsmenge zu erstellen, die auf der Stromabsatzmenge auf dem Strommarkt und dem Anpassungsausmaß der Leistungsabgabe des Stromgenerators und der Kraftstoffverbrauchstendenz, die durch die Kraftstoffverbrauchstendenzberechnungseinheit (12b) erhalten wurde, basiert,
**dadurch gekennzeichnet, dass**
die Kraftstoff nicht berücksichtigende Stromerzeugungsplanungseinheit (12a) dazu ausgelegt ist, den Betriebsplan zum Ausgeben und Betreiben und Anhalten des Stromgenerators zu erstellen, ohne den im Stromgenerator verwendeten Kraftstoff zu berücksichtigen.

2. Stromerzeugungsplanungsvorrichtung (10) nach Anspruch 1, wobei
die Markt-/Schiffszuweisungs-/Wärmeleistungsausgabeanpassungsplanungseinheit (13) dazu ausgelegt ist, die Stromabsatzmenge auf dem Strommarkt oder die Leistungsabgabe des Stromgenerators unter der Einschränkung, dass die restliche Menge an Kraftstoff in dem vorbestimmten Bereich beibehalten wird, durch eine Kostenänderung, die durch Anpassen einer Einheitskraftstoffverbrauchsmenge verursacht ist, welche basierend auf Kraftstoffverbrauchseigenschaften entsprechend einem Strommarktpreis oder einem Stromerzeugungseinheitspreis basierend auf dem durch die Kraftstoff nicht berücksichtigende Stromerzeugungsplanungseinheit (12a) erstellten Betriebsplan und der Abgabeleistung des Stromgenerators berechnet wurde, anzupassen.

3. Stromerzeugungsplanungsvorrichtung (10) nach Anspruch 1 oder 2, wobei die Markt-/Schiffszuweisungs-/Wärmeleistungsausgabeanpassungsplanungseinheit (13) dazu ausgelegt ist, die Schiffszuweisung wie etwa die Route des Kraftstoffschiffs und die Handelsmenge auf dem Kraftstoffmarkt zu bestimmen, indem sie eine Stromabsatzdestination auf dem Kraftstoffmarkt als virtuellen Hafen und einen Kraftstoffhandelspreis, der Kraftstoffkaufkosten, Kraftstoffverkaufsgewinn und Transportkosten umfasst, als Kosten einer Route von einem bestimmten Hafen zu dem virtuellen Hafen heranzieht.

4. Stromerzeugungsplanungsvorrichtung (10) nach einem der Ansprüche 1 bis 3, ferner umfassend:
eine charakteristische Zeitspanne kombinierende Langzeitnachfrageerzeugungseinheit (12c), die dazu ausgelegt ist, jeden aus einer Vielzahl von angenommenen Stromnachfragefällen in n spezifische Zeitspannen zu unterteilen, die unterteilten n Zeitspannen zu kombinieren, um eine Vielzahl von kombinierten Langzeitnachfragefällen zu erzeugen und eine Eintrittswahrscheinlichkeit für jeden aus den erzeugten kombinierten Langzeitnachfragefällen zu berechnen, wobei
die von der charakteristische Zeitspannen kombinierenden Langzeitnachfrageerzeugungseinheit (12c) erzeugten kombinierten Langzeitnachfragefälle als die Nachfrage- und Angebotsprognose in dem Stromsystem an die Kraftstoff nicht berücksichtigende Stromerzeugungsplanungseinheit (12a) weitergegeben werden.

5. Stromerzeugungsplanungsvorrichtung (10) nach einem der Ansprüche 1 bis 4, wobei
die Markt-/Schiffszuweisungs-/Wärmeleistungsausgabeanpassungsplanungseinheit (13) dazu ausgelegt ist, einen Basisfall und einen Schwankungsfall basierend auf der Tendenz der Kraftstoffverbrauchsmenge, die für jeden Fall der Nachfrage- und Angebotsprognose des Stroms berechnet wurde, und der Eintrittswahrscheinlichkeit für den Fall zu erzeugen, mit der restlichen Menge an Kraftstoff dem vorbestimmten Bereich im Basisfall zu entsprechen, ein Abweichungsausmaß der restlichen Menge an Kraftstoff im Schwankungsfall zu minimieren und ein Ergebnis in Bezug auf den Basisfall und den Schwankungsfall auf einem Bildschirm anzuzeigen.

6. Stromerzeugungsplanungsvorrichtung (10) nach einem der Ansprüche 1 bis 5, wobei
bei der durch die Markt-/Schiffszuweisungs-/Wärmeleistungsausgabeanpassungsplanungseinheit (13) ausgeführten Berechnung ein Preis des Strommarkts oder dergleichen, der in einem Zeitintervall, das kürzer als ein Berechnungszeitintervall ist, eingestellt ist, in jedem Berechnungszeitintervall durch Einstellen einer Preisänderung innerhalb des Berechnungszeitintervalls als Preiseigenschaft entsprechend dem Preis und einer Gesamthandelsmenge innerhalb des Intervalls simuliert wird.

7. Stromerzeugungsplanungsvorrichtung (10) nach Anspruch 5, wobei
die Markt-/Schiffszuweisungs-/Wärmeleistungsausgabeanpassungsplanungseinheit (13) dazu ausgelegt ist, entsprechend einem Verhältnis, in dem der Schwankungsfall berücksichtigt wird, die Schiffszuweisung wie etwa die Route des Kraftstoffschiffs, die Handelsmenge auf dem Kraftstoffmarkt und die Stromabsatzmenge auf dem Strommarkt oder das Anpassungsausmaß der Leistungsabgabe des Stromgenerators auszugeben und eine Differenz eines Abgabeergebnisses, das sich entsprechend dem Verhältnis ändert, zu vergleichen und anzuzeigen.

8. Stromerzeugungsplanungsverfahren, umfassend:
Erstellen eines Betriebsplans zum Ausgeben und Betreiben und Anhalten eines Stromgenerators entsprechend einer Nachfrage- und Angebotsprognose in einem Stromsystem;
Berechnen einer Kraftstoffverbrauchstendenz basierend auf dem Betriebsplan:
unter der Einschränkung, dass eine restliche Menge an Kraftstoff einem vorbestimmten Bereich basierend auf dem berechneten Kraftstoffverbrauch entspricht, Bestimmen von zumindest einem aus einer Schiffszuweisung, die eine Route eines Kraftstoffschiffs umfasst, einer Handelsmenge auf einem Kraftstoffmarkt, einer Stromabsatzmenge auf einem Strommarkt und einem Anpassungsausmaß der Leistungsabgabe des Stromgenerators; und
Erstellen eines Stromerzeugungsplans basierend auf einem Anpassungsausmaß einer Kraftstoffverbrauchsmenge, die auf der Stromabsatzmenge auf dem Strommarkt und der Anpassungsmenge der Ausgabe des Stromgenerators und der Kraftstoffverbrauchstendenz basiert,
**dadurch gekennzeichnet, dass**
die Erstellung eines Betriebsplans zum Ausgeben und Betreiben und Anhalten des Stromgenerators erfolgt, ohne den im Stromgenerator verwendeten Kraftstoff zu berücksichtigen.

## Revendications

1. Appareil de planification de génération d'énergie (10), comprenant :
une unité de planification de génération d'énergie ne tenant pas compte du combustible (12a) qui est configurée pour générer un plan de fonctionnement pour la sortie et le fonctionnement et l'arrêt d'un générateur d'énergie selon les prévisions de demande et d'offre dans un système d'alimentation ;
une unité de calcul de tendance de consommation de combustible (12b) qui est configurée pour calculer une tendance de consommation de combustible sur la base du plan de fonctionnement ;
une unité de planification d'ajustement de sortie d'énergie thermique/d'attribution de navire/de marché (13) qui est configurée pour déterminer, sous une contrainte selon laquelle une quantité restante de combustible satisfait une plage prédéterminée sur la base de la consommation de combustible calculée, au moins une parmi une attribution de navire incluant un itinéraire d'un navire de combustible, une quantité d'échange sur un marché de combustible, une quantité de ventes d'énergie sur un marché énergétique, et une quantité d'ajustement de sortie du générateur d'énergie ; et
une unité de planification de génération d'énergie tenant compte du combustible (14) qui est configurée pour générer un plan de génération d'énergie sur la base d'une quantité d'ajustement d'une quantité de consommation de combustible, qui est basée sur la quantité de ventes d'énergie sur le marché énergétique et la quantité d'ajustement de la sortie du générateur d'énergie, et la tendance de consommation de combustible obtenue par l'unité de calcul de tendance de consommation de combustible (12b),
**caractérisé en ce que**
l'unité de planification de génération d'énergie ne tenant pas compte du combustible (12a) est configurée pour construire le plan de fonctionnement pour la sortie et le fonctionnement et l'arrêt du générateur d'énergie sans tenir compte du combustible utilisé dans le générateur d'énergie.

2. Appareil de planification de génération d'énergie (10) selon la revendication 1, dans lequel
l'unité de planification d'ajustement de sortie d'énergie thermique/d'attribution de navire/de marché (13) est configurée pour ajuster la quantité des ventes d'énergie sur le marché énergétique ou la sortie du générateur d'énergie sous une contrainte selon laquelle la quantité restante du combustible est maintenue dans la plage prédéterminée par un changement de coût qui est causé par l'ajustement d'une quantité de consommation de combustible unitaire calculée sur la base des caractéristiques de consommation de combustible selon un prix de marché énergétique ou un prix unitaire de génération d'énergie sur la base du plan de fonctionnement construit par l'unité de planification de génération d'énergie ne tenant pas compte du combustible (12a) et de la sortie du générateur d'énergie.

3. Appareil de planification de génération d'énergie (10) selon la revendication 1 ou 2, dans lequel
l'unité de planification d'ajustement de sortie d'énergie thermique/d'attribution de navire/de marché (13) est configurée pour déterminer une attribution de navire telle que l'itinéraire du navire de combustible et la quantité de transactions sur le marché de combustible en prenant une destination de vente d'énergie sur le marché de combustible en tant que port virtuel et en prenant, en tant que coût d'un itinéraire d'un certain port au port virtuel, un coût de transactions de combustible incluant un coût d'achat de combustible, un bénéfice de vente de combustible et un coût de transport.

4. Appareil de planification de génération d'énergie (10) selon l'une quelconque des revendications 1 à 3, comprenant en outre :
une unité de création de demande à long terme combinée à une période caractéristique (12c) qui est configurée pour diviser chacun d'une pluralité de cas de demande supposée d'énergie en n périodes spécifiques, combiner les n périodes divisées pour créer une pluralité de cas de demande à long terme combinée, et calculer une probabilité d'occurrence pour chacun des cas de demande à long terme combinée créés, dans lequel
les cas de demande à long terme combinée créés par l'unité de création de demande à long terme combinée de période caractéristique (12c) sont donnés à l'unité de planification de génération d'énergie ne tenant pas compte du combustible (12a) en tant que prévision de demande et d'offre dans le système d'alimentation.

5. Appareil de planification de génération d'énergie (10) selon l'une quelconque des revendications 1 à 4, dans lequel
l'unité de planification d'ajustement de sortie d'énergie thermique/d'attribution de navire/de marché (13) est configurée pour créer un cas de base et un cas de variation sur la base de la tendance de la quantité de consommation de combustible calculée pour chaque cas de la prévision de demande et d'offre de l'énergie et d'une probabilité d'occurrence du cas, faire correspondre la quantité restante du combustible à la plage prédéterminée dans le cas de base, minimiser une quantité d'écart de la quantité restante du combustible dans le cas de variation, et afficher un résultat dans le cas de base et le cas de variation sur un écran.

6. Appareil de planification de génération d'énergie (10) selon l'une quelconque des revendications 1 à 5, dans lequel
dans le calcul exécuté par l'unité de planification d'ajustement de sortie d'énergie thermique/d'attribution de navire/de marché (13), un prix du marché énergétique ou similaire défini à un intervalle de temps plus court qu'un intervalle de temps de calcul est simulé en définissant un changement de prix dans l'intervalle de temps de calcul à chaque intervalle de temps de calcul en tant que caractéristique de prix selon le prix et une quantité de transactions totale dans l'intervalle.

7. Appareil de planification de génération d'énergie (10) selon la revendication 5, dans lequel
l'unité de planification d'ajustement de sortie d'énergie thermique/d'attribution de navire/de marché (13) est configurée pour délivrer en sortie, selon un rapport dans lequel le cas de variation est considéré, l'attribution de navire telle que la route du navire de combustible, la quantité de transactions sur le marché de combustible et la quantité de ventes d'énergie sur le marché énergétique ou la quantité d'ajustement de la sortie du générateur d'énergie, et pour comparer et afficher une différence dans un résultat de sortie qui change selon le rapport.

8. Procédé de planification de génération d'énergie, comprenant les étapes consistant à :
construire un plan de fonctionnement pour la sortie et le fonctionnement et l'arrêt d'un générateur d'énergie en fonction des prévisions de demande et d'offre dans un système d'alimentation ;
calculer une tendance de consommation de combustible sur la base du plan de fonctionnement ;
déterminer, sous une contrainte selon laquelle une quantité restante de combustible satisfait à une plage prédéterminée sur la base de la consommation de combustible calculée, au moins une parmi l'attribution de navire incluant un itinéraire d'un navire de combustible, une quantité de transactions sur un marché de combustible, une quantité de ventes d'énergie sur un marché énergétique, et une quantité d'ajustement de la sortie du générateur d'énergie ; et
construire un plan de génération d'énergie basé sur une quantité d'ajustement d'une quantité de consommation de combustible, qui est basée sur la quantité de ventes d'énergie sur le marché énergétique et la quantité d'ajustement de la sortie du générateur d'énergie, et la tendance de la consommation de combustible,
**caractérisé en ce que**
la construction d'un plan de fonctionnement pour la sortie et le fonctionnement et l'arrêt d'un générateur d'énergie survient sans tenir compte du combustible utilisé dans le générateur d'énergie.
